(19) Europäisches Patentamt / European Patent Office / Office européen des brevets

(11) **EP 3 765 650 B1**

(12) **FASCICULE DE BREVET EUROPEEN**

(45) Date de publication et mention
de la délivrance du brevet:
**04.05.2022 Bulletin 2022/18**

(21) Numéro de dépôt: **19742418.7**

(22) Date de dépôt: **15.03.2019**

(51) Classification Internationale des Brevets (IPC):
*C23C 8/02* (2006.01)    *C23C 8/14* (2006.01)
*C23C 8/18* (2006.01)    *C23C 8/80* (2006.01)
*C22C 38/18* (2006.01)    *F24S 70/20* (2018.01)
*F24S 70/30* (2018.01)    *F24S 20/20* (2018.01)

(52) Classification Coopérative des Brevets (CPC):
**C23C 8/02; C22C 38/18; C22C 38/22; C22C 38/24;
C22C 38/26; C22C 38/28; C22C 38/30;
C22C 38/32; C22C 38/40; C23C 8/14; C23C 8/18;
C23C 8/80; F24S 20/20; F24S 70/20; F24S 70/30;**
(Cont.)

(86) Numéro de dépôt international:
**PCT/FR2019/050583**

(87) Numéro de publication internationale:
**WO 2019/186024 (03.10.2019 Gazette 2019/40)**

(54) **PROCÉDÉ POUR FORMER UNE COUCHE D'OXYDE MONOPHASE (FE, CR)2 O3 DE STRUCTURE RHOMBOÉDRIQUE SUR UN SUBSTRAT EN ACIER OU EN SUPER ALLIAGE**

VERFAHREN ZUR HERSTELLUNG EINER SCHICHT AUS EINPHASIGEM OXID (FE, CR)2 O3 MIT EINER RHOMBOEDRISCHEN STRUKTUR AUF EINEM SUBSTRAT AUS STAHL ODER EINER SUPERLEGIERUNG

METHOD FOR FORMING A LAYER OF SINGLE-PHASE OXIDE (FE, CR)2 O3 WITH A RHOMBOHEDRAL STRUCTURE ON A STEEL OR SUPER ALLOY SUBSTRATE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats de validation désignés:
**MA TN**

(30) Priorité: **15.03.2018 FR 1852240**

(43) Date de publication de la demande:
**20.01.2021 Bulletin 2021/03**

(73) Titulaires:
• **Commissariat à l'énergie atomique
et aux énergies alternatives
75015 Paris (FR)**
• **Mannesmann Precision Tubes France
89600 St-Florentin (FR)**

(72) Inventeurs:
• **RACCURT, Olivier
38054 Grenoble Cedex 09 (FR)**

• **GENTZBITTEL, Jean-Marie
38054 Grenoble Cedex 09 (FR)**
• **SICARDY, Olivier
38054 Grenoble Cedex 09 (FR)**
• **BOURGUIGNON, Francis
51300 Vitry-le-François (FR)**
• **MARCHAIS, Pierre-Jean
51300 Vitry-le-François (FR)**

(74) Mandataire: **Brevalex
95, rue d'Amsterdam
75378 Paris Cedex 8 (FR)**

(56) Documents cités:
**EP-A1- 2 341 038     WO-A1-2015/087021
FR-A1- 2 976 349**

(52) Classification Coopérative des Brevets (CPC):
(Cont.)
Y02E 10/40

**Description**

## DOMAINE TECHNIQUE ET ÉTAT DE LA TECHNIQUE ANTÉRIEURE

La présente invention se rapporte à un procédé pour former une couche d'oxyde monophasé $(Fe, Cr)_2O_3$ de structure rhomboédrique sur un substrat en acier ou en super alliage.

L'invention trouve notamment des applications dans le domaine des absorbeurs solaires thermiques pour les centrales solaires thermiques à concentration (CSP pour « Concentrating Solar Power Plant »).

Une centrale solaire thermique à concentration est une centrale destinée à concentrer les rayons du soleil, à l'aide de miroirs pour chauffer un fluide caloporteur. Le fluide caloporteur sert alors de source chaude dans un cycle thermodynamique en vue de produire de l'électricité ou à usage direct de cette source chaude. La concentration des rayonnements solaires permet d'atteindre des températures plus élevées et de bénéficier d'une conversion thermodynamique importante.

Un des éléments essentiels d'une centrale solaire thermique à concentration est l'élément absorbeur de rayonnements solaires qui a pour fonction d'absorber le rayonnement incident du soleil pour le convertir en chaleur. Afin de maximiser le rendement de l'absorbeur, celui-ci comporte en général un revêtement, appelé revêtement sélectif ou traitement sélectif. Le revêtement sélectif permet une absorption maximale de l'énergie solaire incidente tout en réémettant le moins possible de rayonnements infrarouges (principe du corps noir). En particulier, un tel revêtement sélectif est considéré comme parfait s'il absorbe toutes les longueurs d'ondes inférieures à une longueur d'onde de coupure et réfléchit toutes les longueurs d'ondes supérieures à cette même longueur d'onde de coupure.

Classiquement, le revêtement sélectif est obtenu en déposant une couche métallique, jouant le rôle de réflecteur infrarouge, puis une ou plusieurs couches céramique/métal (cermet) comme absorbeur, et finalement une ou plusieurs couches antireflets. Cependant, ces couches sont généralement obtenues par dépôt sous vide, qui est une technique de dépôt relativement coûteuse, ce qui augmente les coûts de fabrication de l'absorbeur solaire. Par ailleurs, ces matériaux ne présentent pas une bonne tenue à l'oxydation sous air à haute température, ce qui limite leur utilisation sous air à des températures de l'ordre de (~300°C) ou alors une utilisation sous vide. D'une manière générale, les procédés de dépôt permettent d'obtenir des couches qui ont les propriétés optiques voulues mais pas nécessairement la stabilité en température ni le caractère protecteur vis-à-vis du substrat.

Une autre solution consiste à utiliser un substrat en acier contenant du chrome et à l'oxyder de manière à former une couche d'oxyde intrinsèquement sélective, c'est-à-dire que la couche d'oxyde est capable d'absorber un maximum d'énergie solaire incidente et de réémettre un minimum de rayonnement infrarouge. Par absorber un maximum d'énergie, on entend que la couche mince superficielle permet d'absorber au moins 75% du rayonnement solaire. Par réémettre un minimum de rayonnement infrarouge, on entend que l'émissivité de la couche mince superficielle est inférieure à 25%. Une telle couche doit être une couche d'oxyde monophasée de $(Fe, Cr)_2O_3$, conforme, et avoir une épaisseur $\leq 150$nm. Plus l'oxyde est épais, plus l'absorption dans la gamme du rayonnement solaire sera bonne, mais plus l'émissivité du traitement sélectif augmentera dans la gamme des infra-rouges. De plus, la couche doit présenter une bonne stabilité thermique. La stabilité de la couche d'oxyde est également dépendante de son épaisseur, plus elle est importante plus elle est défavorable

Dans l'article de Greef et al. ("The oxidation of industrial FeCrMo steel", Corrosion Science 42 (2000) 1725-1740), l'influence de différents paramètres, et notamment, l'influence du traitement thermique, sur la formation de la couche d'oxydation est étudiée. L'oxydation est réalisée sur un acier FeCrMo industriel à une température de 157°C à 758°C, sous pression partielle de dioxygène contrôlée. Pour des températures inférieures à 400°C, une couche d'oxyde comprenant principalement du $Fe_2O_3$ et une faible quantité de $Cr_2O_3$ se forme. De 400°C à 600°C, on obtient une couche d'oxyde comprenant un mélange de FeO, $Fe_2O_3$, et de $Cr_2O_3$. Pour des températures supérieures à 600°C, une couche de $Cr_2O_3$ est obtenue.

Différentes préparations de surface du substrat peuvent être réalisées avant l'étape d'oxydation.

Par exemple, l'obtention d'une couche optique sélective pour former un absorbeur solaire par polissage puis oxydation thermique d'un acier inoxydable est étudiée depuis les années 80. L'article de V.C Sharma et al. ("A comparison of thermal performance of austenitic stainless steel solar absorber plates coloured by chemical and thermal oxidation techniques", Energy Vol. 6. pp. 133-138, 1981) décrit un acier riche en Chrome (18/8 Cr/Ni), poli, puis soumis à un traitement thermique à 770°C, pendant 30 minutes. Les meilleures performances obtenues sont une absorbance solaire de 84% et une émittance de 22%.

B. Karlsson et al. ("Optical constants and spectral selectivity of stainless steel and its oxides", J. Appl. Phys. 53(9), 6340-6346, 1982) étudie les propriétés optiques de différents aciers inoxydables, préalablement polis, puis soumis à un traitement thermique. La couche d'oxyde obtenue est une couche d'oxyde mixte de $Cr_2O_3$ et de $Fe_2O_3$.

Dans le document WO-A-2015/087021, l'absorbeur solaire est obtenu à partir d'un substrat en acier ayant une teneur massique en chrome comprise entre 6% et 12,5%. L'oxydation thermique, à une température allant de 400°C à 900°C, est réalisée sur le substrat préalablement poli ou étiré. L'étape de polissage permet de former des substrats de faible rugosité tout en limitant la formation de microdéformation au sein du substrat. La couche obtenue est un oxyde de fer et de chrome, ayant une épaisseur comprise entre 10nm et 1000nm, et de préférence comprise entre 20nm et 500nm.

Dans le document EP-A-2784172, un absorbeur solaire sélectif est obtenu par oxydation, entre 500°C et 1150°C, d'un acier ayant une teneur massique en chrome entre 7,5% et 14%. Le substrat peut être laminé à froid ou étiré à froid avant l'étape d'oxydation. L'oxyde formé contient du $Cr_2O_3$ et des oxydes de type spinelle. Des conditions inférieures en températures sont également proposées, mais il est précisé que dans ce cas la formation de l'oxyde $Fe_2O_3$ est favorisée au détriment du $Cr_2O_3$. Cependant, l'oxyde obtenu est différent de celui recherché et donc les performances optiques et/ou de stabilité thermique sont différentes également.

Le substrat en acier peut également être préparé par un procédé SMAT (« Surface Mechanical Attrition Treatment »). Ce procédé consiste à envoyer sur la surface du substrat des billes avec une énergie mécanique extrêmement importante, pour déstructurer la structure même du substrat, sur une profondeur de plusieurs centaines de microns. Lors de la mise en œuvre du procédé SMAT, la température du substrat reste relativement proche de la température opératoire. La réalisation d'un traitement thermique sous air, sur un substrat ainsi préparé conduit à la formation d'une couche d'oxyde riche en chrome. La présence de nombreux défauts dans la structure du substrat favorise la migration du Chrome lors du traitement thermique d'oxydation. Cependant, la couche formée présente une structure nanocristalline du fait du haut niveau de déformations mécaniques introduites dans la structure même du substrat et l'on observe une variation importante de la structure. Les couches d'oxydes formées sont très spécifiques au procédé SMAT. On observe généralement l'apparition tout d'abord d'un bicouche ($Fe_3O_4/FeCr_2O_4$) qui se transforme ensuite au cours du temps de traitement thermique en un tricouche $Fe_3O_4/FeCr_2O_4/(Fe,Cr)_2O_3$ avec une épaisseur totale supérieure au micron, comme décrit dans l'article de Xia et al. ("Improve oxidation resistance at high temperature by nanocrystalline surface layer", Scientific Reports, 5:13027, DOI: 10.1038/srep13027, 2015).

Les procédés d'oxydation classiquement mis en œuvre dans l'art antérieur conduisent en général à des couches d'oxydes plus épaisses (épaisseur supérieure à 150nm), en $Cr_2O_3$ et/ou polyphasées.

Cependant, une couche de $Cr_2O_3$, une couche de $(Fe, Cr)_3O_4$ ou un oxyde polyphasé (par exemple biphasé ou triphasé) contenant une phase de $(Fe, Cr)_2O_3$ rhomboédrique ne permet pas d'obtenir l'ensemble des propriétés recherchées. Seule, une couche monophasique de $(Fe, Cr)_2O_3$ permet d'atteindre de telles propriétés.

Aucun de ces documents ne décrit un procédé permettant d'obtenir une couche d'oxyde de $(Fe, Cr)_2O_3$ rhomboédrique monophasée, et d'épaisseur inférieure ou égale à 150nm adhérent à un substrat en acier.

## EXPOSÉ DE L'INVENTION

C'est, par conséquent, un but de la présente invention de proposer un procédé permettant de former, à la surface d'un substrat en acier ou en super alliage, une couche d'oxyde à la fois de structure cristallographique maîtrisée (un oxyde monophasé de $(Fe, Cr)_2O_3$) et d'épaisseur contrôlée (70-150nm).

Ce but est atteint par un procédé pour former une couche d'oxyde $(Fe, Cr)_2O_3$ de structure rhomboédrique sur un substrat en acier ou en super alliage comprenant les étapes successives suivantes :

> a) fourniture d'un substrat en acier ou en super alliage recouvert par une couche superficielle, l'acier comprenant au moins 2% en poids de chrome,
> b) retrait de la couche superficielle jusqu'à atteindre le substrat en acier ou en super alliage, par une étape de soustraction, avantageusement une étape de soustraction mécanique, sous une atmosphère contenant au moins 0,2 atm de dioxygène, l'étape de soustraction engendrant un niveau de microdéformations dans le réseau cristallin de l'acier ou du super alliage supérieur à $1,0.10^{-3}$ et un échauffement local selon une cinétique supérieure à 400 °C/s, de manière à former une couche d'oxyde monophasé $(Fe, Cr)_2O_3$ rhomboédrique,
> c) réalisation d'un traitement thermique, sous air, à une pression partielle en eau inférieure à 10.000 ppm, et à une température allant de 400°C à 1000°C, de manière à faire croitre la couche d'oxyde monophasé rhomboédrique formée à l'étape b) jusqu'à une épaisseur allant de 70nm à 150nm.

L'invention se distingue fondamentalement de l'art antérieur par l'étape particulière de préparation de surface du substrat, qui conduit à la formation d'une couche d'oxyde monophasé rhomboédrique $(Fe, Cr)_2O_3$, adhérant au substrat en acier ou en super alliage. Le traitement thermique permet de faire croître la couche d'oxyde. La couche obtenue est une couche de faible épaisseur (inférieure ou égale à 150nm). Cette couche d'oxyde confère au substrat des propriétés optiques intéressantes pour l'application solaire thermique, avec une forte absorbance solaire (typiquement supérieure à 75%) et une faible émittance (typiquement inférieure à 20% à 100°C), une bonne résistance à l'oxydation et à la corrosion, une bonne stabilité en température, jusqu'à des températures de 600°C, sous air, pour des applications solaires thermodynamiques à concentration, notamment pour une application d'absorbeur solaire thermique.

L'étape de soustraction est une étape soustractive de matière pour mettre l'acier ou le super alliage à nu en retirant la couche superficielle. La couche superficielle peut contenir, par exemple, des polluants, des oxydes, et/ou des carbures. Cette étape de soustraction de matière engendre simultanément :

- des déformations à la surface du substrat en acier ou en super alliage et donc conduit à la création de contraintes mécaniques importantes de l'acier ou du super alliage, par frottement, arrachement, et/ou cisaillement
- un fort gradient de température de plusieurs centaines de degrés par seconde à l'interface matière/moyen de soustraction est engendré.

Cette étape est effectuée sous atmosphère oxydante (i.e. contenant au moins 0,2 atm de dioxygène), de préférence sous air, ce qui permet de créer instantanément une fine couche d'oxyde. Par atmosphère, nous entendons une atmosphère gazeuse, par exemple l'air ambiant, l'air enrichi en dioxygène ou l'air enrichi en vapeur d'eau. L'atmosphère oxydante contient au moins 5% en volume d'un précurseur en oxygène, comme par exemple, $O_2$, $H_2O$, ou $O_3$.

La réalisation conjointe des déformations de surface et de l'échauffement de température à la surface du substrat lors du retrait de la couche superficielle, sous atmosphère oxydante, conduit à l'obtention d'une couche d'oxyde monophasé mixte de fer et chrome $(Fe,Cr)_2O_3$ de structure rhomboédrique.

L'oxyde est monophasé, c'est-à-dire qu'il comprend au moins 90% massique de phase rhomboédrique, de préférence au moins 95% et encore plus préférentiellement 100% massique de phase rhomboédrique. L'oxyde ne comprend pas d'autres couches d'oxydes, telles que la forme spinelle (Fe,Cr), les formes riches en Fe de type $Fe_xO_y$ que l'on retrouve avec les procédés de l'art antérieur, comme le polissage, le SMAT,....

Par il comprend 100% massique de phase rhomboédrique, on entend que la couche d'oxyde contient soit uniquement la phase rhomboédrique soit la phase rhomboédrique et une quantité négligeable d'une ou plusieurs autres phases. Une quantité est dite négligeable si elle ne peut pas être détectée, par exemple si elle ne peut pas être détectée par diffraction des rayons X.

Les mesures optiques établissent clairement des propriétés différentes et systématiquement plus sélectives par rapport aux oxydes formés selon l'art antérieur.

Avantageusement, l'étape de soustraction est suivie d'un refroidissement rapide (typiquement avec un gradient de refroidissement supérieur ou égal à 100°C/s sur la plage 900°C/400°C) pour mettre en contrainte de compression l'oxyde formé. Ceci permet d'améliorer la tenue mécanique de la couche d'oxyde, et limite les possibilités de migration des éléments au sein de l'oxyde.

L'étape c) permet de faire croître l'oxyde jusqu'à une épaisseur allant de 70nm à 150nm. L'atmosphère utilisée pour le traitement thermique de croissance sera une atmosphère d'air sec ou contenant une pression partielle de $H_2O$ comprise entre 1 ppm et 10.000 ppm.

La couche d'oxyde formée est fine (épaisseur inférieure ou égale à 150nm), dense, continue et conforme. Elle présente une bonne tenue mécanique sur le substrat, car l'oxyde formé est en compression.

Avec un tel procédé, la nature chimique et/ou les propriétés mécaniques du substrat sont peu modifiées.

Avantageusement, l'étape de soustraction de l'étape b) est réalisée à une température allant de -10 °C à 400 °C.

Avantageusement, l'étape de soustraction de l'étape b) est réalisée à une température allant de -10 °C à 100 °C.

Avantageusement, la teneur en eau lors de l'étape b) est inférieure à 20000ppm, de préférence inférieure à 500ppm et encore plus préférentiellement inférieure à 3ppm.

Avantageusement, le niveau de microdéformations engendrées dans le réseau cristallin de l'acier ou du super alliage à l'étape b) est supérieur à $1,5.10^{-3}$, et de préférence supérieur à $3.10^{-3}$.

Avantageusement, la cinétique d'échauffement locale lors de l'étape de soustraction est comprise entre 400°C/s à 900°C/s. et plus avantageusement entre 400°C et 800°C

Avantageusement, le traitement thermique est réalisé pendant une durée allant de 5 s à 2 h, et de préférence, de 1 min à 60 minutes.

La durée et la température du traitement thermique seront choisies par l'homme du métier en fonction de la géométrie du substrat.

Avantageusement, la pression partielle en eau, lors de l'étape c), est inférieure à 600 ppm, et de préférence inférieure à 500 ppm.

Avantageusement, l'épaisseur de la couche d'oxyde rhomboédrique obtenue à l'étape c) va de 70 à 150nm.

Avantageusement, le pourcentage de chrome de l'acier va de 2 à 25% en poids, et de préférence, de 5 à 16% en poids.

L'invention concerne également un procédé de fabrication d'un absorbeur solaire comprenant les étapes successive suivantes :

- formation d'une couche d'oxyde monophasé $(Fe, Cr)_2O_3$ de structure rhomboédrique sur un substrat en acier ou en super alliage, selon les étapes a) à c) telles que définies dans le procédé pour former une couche d'oxyde monophasé $(Fe, Cr)_2O_3$ de structure rhomboédrique sur un substrat en acier ou en super alliage selon l'invention,

- application d'une couche antireflet sur la couche d'oxyde.

L'invention concerne également un absorbeur solaire obtenu par le procédé précédemment décrit, comprenant un substrat en acier ou en super alliage recouvert successivement par une couche d'oxyde monophasé $(Fe, Cr)_2O_3$ rhomboédrique, ayant une épaisseur allant de 70nm à 150nm, et par une couche antireflet.

Avantageusement, la couche d'oxyde a une épaisseur allant de 80nm à 120nm.

## BRÈVE DESCRIPTION DES DESSINS

La présente invention sera mieux comprise sur la base de la description qui va suivre et des dessins en annexe sur lesquels :

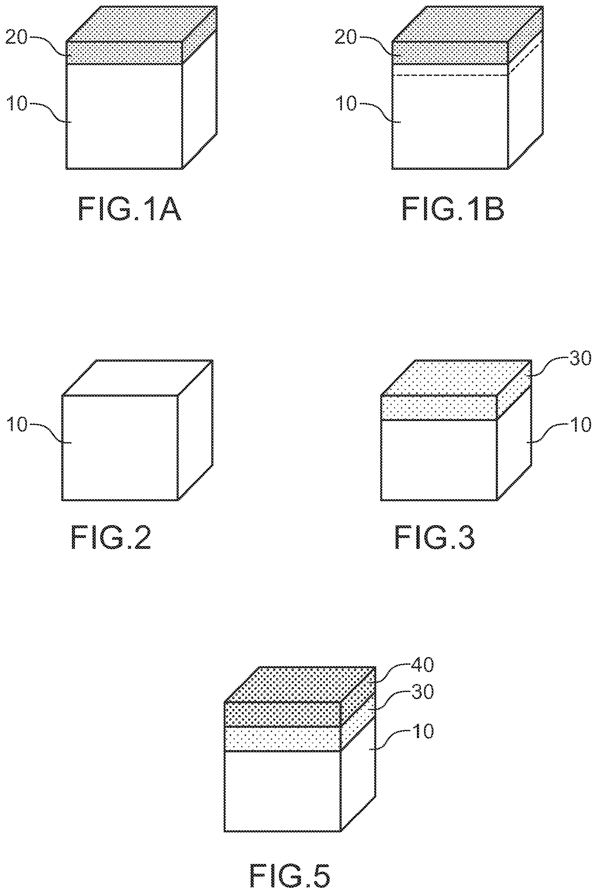

- les figures 1A, 1B, 2 et 3 représentent différentes étapes du procédé de formation d'une couche d'oxyde rhomboédrique $(Fe, Cr)_2O_3$, selon un mode de réalisation de l'invention,

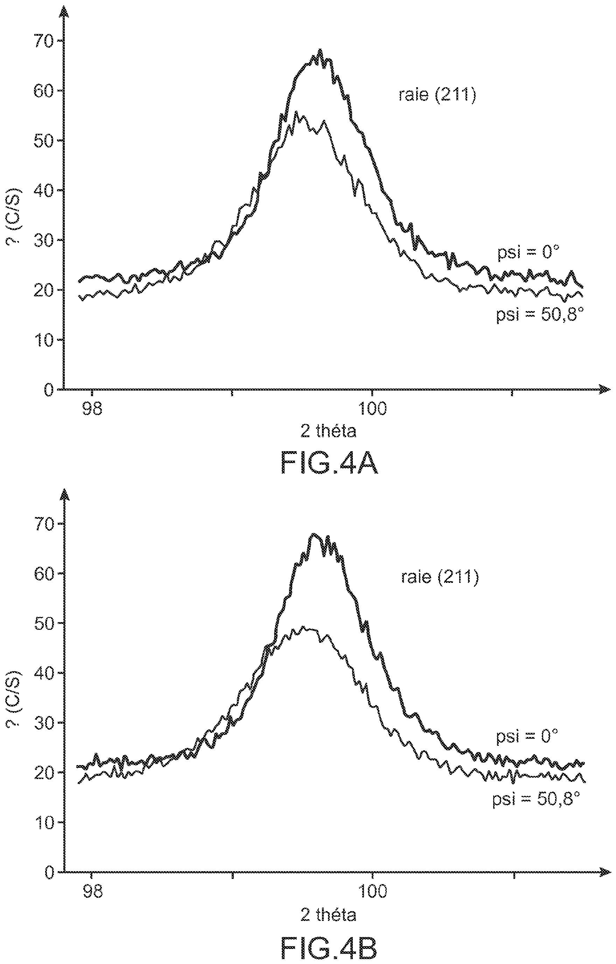

- les figures 4A et 4B sont des diffractogrammes des rayons X obtenus, respectivement, sur l'axe et sur la circonférence d'un tube en acier sur lequel a été réalisée une étape de soustraction de matière, selon un mode de réalisation particulier de l'invention,
- la figure 5 représente, de manière schématique, et en trois dimensions, un substrat recouvert par une couche d'oxyde intrinsèquement sélective, obtenue par le procédé de l'invention, et par une couche antireflet, selon un mode de réalisation particulier,

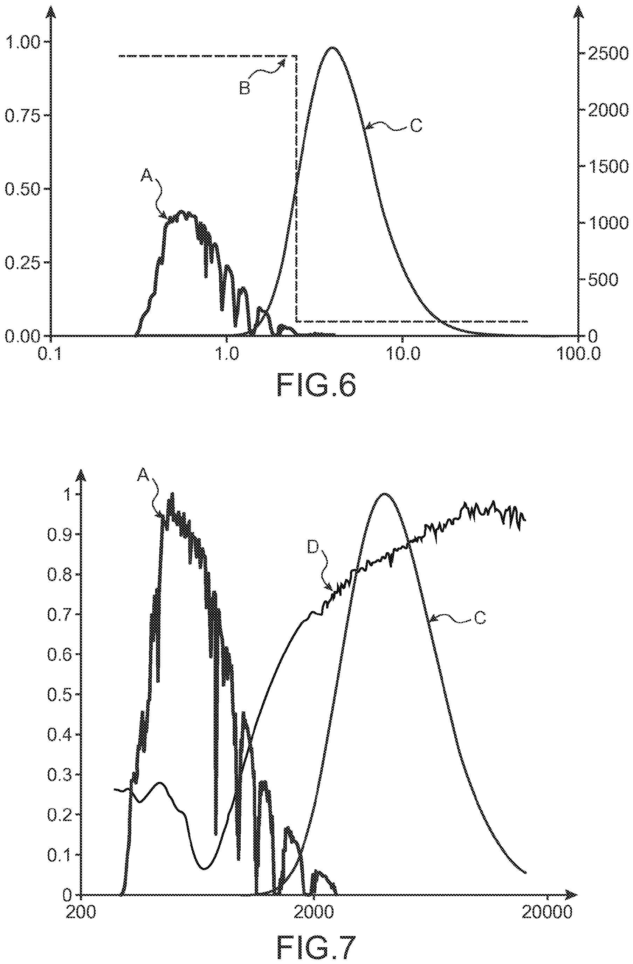

- la figure 6 est une représentation graphique des performances spectrales d'un absorbeur sélectif solaire, notamment la courbe B est une représentation graphique de l'absorbance ou de l'émittance (axe vertical gauche, en unités arbitraires) et de l'irradiance (axe vertical droite, en unités arbitraires) en fonction de la longueur d'onde (axe horizontal en $\mu$m) d'un absorbeur solaire sélectif, la courbe A représente le spectre solaire, et la courbe C le rayonnement d'un corps noir à 450 °C,
- la figure 7 est une représentation graphique des performances spectrales d'un absorbeur du type T91 polis et oxydé selon le procédé décrit dans le document [4] cité à la fin de la description, notamment, la courbe D représente la réflectance dudit absorbeur (axe vertical, en unités arbitraires) en fonction de la longueur d'onde , les courbes A et C sont les mêmes que celle de la figure 6,

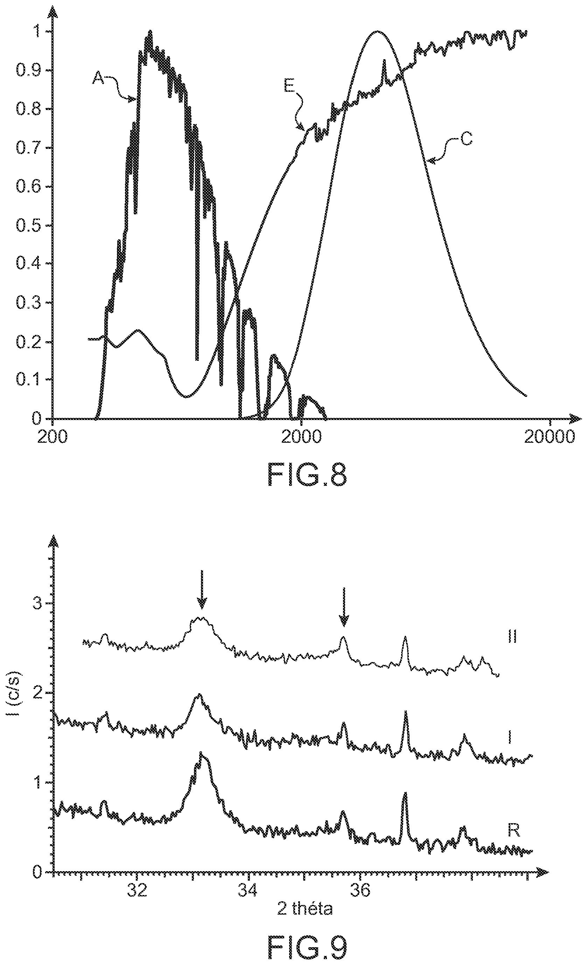

- la figure 8 est une représentation graphique des performances spectrales d'un absorbeur du type T91 polis et oxydé par le procédé selon la présente invention, notamment, la courbe E représente la réflectance dudit absorbeur (axe vertical, en unités arbitraires) en fonction de la longueur d'onde , les courbes A et C sont les mêmes que celle de la figure 6,
- la figure 9 représente des diffractogrammes obtenus sur un échantillon préparé selon le procédé de la présente invention, avant exposition (diffractogramme « R »), après 3000 heures d'exposition à 500 °C et sous air, respectivement, dans la partie I (diffractogramme « I »), et dans la partie II (diffractogramme « II »),

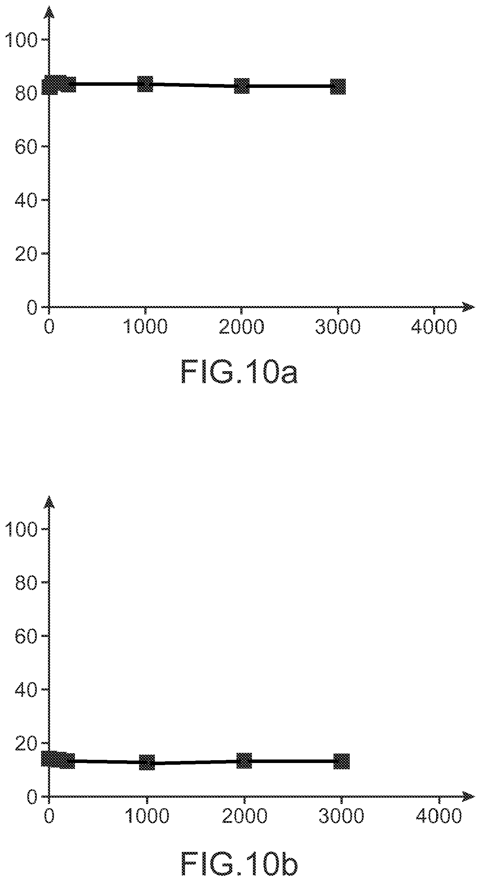

- les figures 10a et 10b sont des représentations graphiques de l'évolution, respectivement, de l'absorbance solaire et de l'émittance à 450 °C (axe vertical en pourcentage) en fonction du temps d'exposition (axe horizontal en heures) d'un substrat oxyde selon le procédé de la présente invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et pouvant se combiner entre elles.

## EXPOSÉ DÉTAILLÉ DE MODES DE RÉALISATION PARTICULIERS

Le procédé pour former une couche d'oxyde monophasé $(Fe, Cr)_2O_3$ de structure rhomboédrique sur un substrat 10 en acier comprend les étapes successives suivantes :

a) fourniture d'un substrat 10 en acier ou en super alliage recouvert par une couche superficielle 20, l'acier comprenant au moins 2% en poids de chrome (figures 1A et 1B),

b) retrait de la couche superficielle 20 jusqu'à atteindre le substrat 10 en acier ou en super alliage, par une étape de soustraction, sous une atmosphère contenant au moins 0,2 atm de dioxygène, l'étape de soustraction, engendrant un niveau de microdéformations dans le réseau cristallin de l'acier supérieur à $1,0.10^{-3}$ et un échauffement local selon une cinétique supérieur à 400° C/s, de manière à former une couche d'oxyde 30 $(Fe, Cr)_2O_3$ rhomboédrique (figures 2 et 3),

c) réalisation d'un traitement thermique, sous air, à une pression partielle en eau inférieure à 10.000 ppm, et à une température allant de 400 °C à 1000 °C, de manière à faire croitre la couche d'oxyde 30 rhomboédrique formée à l'étape b) jusqu'à une épaisseur allant de 70 nm à 150 nm.

Le substrat 10 :

Le substrat 10 fourni à l'étape a) est un substrat en acier ou en super alliage.

Le substrat 10 en acier comprend au moins 2% en poids de chrome.

L'homme du métier pourra, par exemple, choisir un acier peu allié, faiblement allié, fortement allié. De préférence, l'acier ou le super alliage comprend de 2% à 25% en poids de chrome, et de préférence de 2% à 20% en poids de chrome, et encore plus préférentiellement de 5 à 16% en poids.

Les aciers peuvent être des aciers classiquement utilisés dans le domaine de l'énergie comme par exemple les aciers suivants les normes Européenne EN10216, Américaine ASTM A213, code de construction ASME ou autres, contenant plus de 2% de chrome tel que 10CrMo9-10 (T22) (1.7380), llCrMo9-10 (T22) (1.7383), 20CrMoV13-5-5 (1.7779), 7CrWVMoNb9-6 (T23) (1.8201), 7CrMoVTiB10-10 (T24) (1.7378), X11CrMo5 (T5) (1.7362), X11CrMo9-1 (T9) (1.7386), X10CrMoVNb9-1 (T91) (1.4903), X10CrWMoVNb9-2 (T92) (1.4901), X11CrMoWVNb9-1-1 (E911) (1.4905), X12CrCoWMoVNb12-2-2 (1.4915), X20CrMoV11-1 (1.4922)

Les aciers utilisés peuvent également être des aciers inoxydables Cr-Ni choisis parmi les normes EN10088, AISI, X7Cr13 (1.4003), X10Cr13 (1.4006), X12CrS13 (1.4005), X20Cr13 (1.4021), X30Cr13 (1.4028).

On choisira, avantageusement, un super alliage base nickel et/ou un super alliage base cobalt. Le super alliage est, par exemple, un super alliage de type Inconel® commercialisé par la société Special Metals Corporation ou encore un super alliage ASTM-A-494 (625).

Le substrat 10 peut être de nombreuses formes géométriques. Par exemple, il peut être de forme plane, concave ou convexe, tubulaire, etc. Toute forme sur laquelle peut être retirée la couche superficielle 20 par soustraction de matière pourra être choisie par l'homme du métier.

La pièce peut comporter un trou traversant ou un trou borgne, un épaulement, une gorge, une rainure, ou encore présenter plusieurs surfaces élémentaires par l'association d'une sphère et d'un cylindre, d'un plan et/ou d'un cône.

Comme représenté sur les figures 1A et 1B, le substrat 10 est recouvert par une couche superficielle 20. Par couche superficielle 20, on entend que le substrat 10 est recouvert par une couche pouvant être partiellement ou totalement oxydée et/ou carburée/décarburée et/ou pouvant contenir des polluants. Par ailleurs, selon la présente invention, la couche superficielle 20 peut être de même nature chimique que le volume du substrat 10.

La couche superficielle 20 recouvrant le substrat 10 fourni à l'étape a) ne requiert pas un état de surface particulier et/ou une étape de préparation particulière. Un état standard de propreté est suffisant, de même en ce qui concerne l'oxydation, un état standard sans piqure est suffisant.

La surface de la couche superficielle 20 peut être rugueuse ou lisse. Le substrat 10 peut être directement issu d'un brut de coulée, laminé à chaud ou à froid, étiré, forgé à chaud ou à froid ou avoir été préalablement soumis à une étape de préparation de surface, par exemple poli chimiquement ou mécaniquement. Ces modes de mise en forme ou de préparation préalables ne sont pas exhaustifs.

D'un point de vue général, la couche superficielle 20 peut être dans un état quelconque puisque cette couche sera retirée lors de l'étape b).

Soustraction de la couche mince superficielle du substrat 10 :

Lors de l'étape b), la couche superficielle 20 recouvrant le substrat 10 est retirée (figure 2).

Une partie du substrat 10 peut également être retirée, en plus de la couche superficielle 20 (par exemple, en retirant la couche superficielle et la partie externe du substrat, représentée par les pointillés sur la figure 1B).

L'étape de soustraction permet de retirer les polluants, oxydes et/ou carbures pouvant recouvrir le substrat 10.

La quantité de matière à retirer pour atteindre la matière native du substrat 10 dépendra de l'état de surface du substrat 10. Elle va, de préférence, de 0,05mm à 3mm, et encore plus préférentiellement de 0,1mm à 1mm.

L'épaisseur de matière retirée est, avantageusement, identique ou sensiblement identique en tout point du substrat 10.

La soustraction de matière peut être mécanique et obtenue par frottements, cisaillements, arrachement, etc.

L'homme du métier choisira un procédé de soustraction de matière permettant à la fois de :

i. retirer la couche superficielle 20 de la surface jusqu'à atteindre la matière native du substrat 10,
ii. atteindre un niveau de microdéformations (approximation de Lorentz) supérieur à $1,0.10^{-3}$, préférentiellement supérieur à $1,5.10^{-3}$ et encore plus préférentiellement supérieur à $3,0.10^{-3}$ ; le niveau de microdéformations peut, par exemple, aller jusqu'à des valeurs de $6,6.10^{-3}$ voire même jusqu'à des valeurs supérieures en fonction du procédé de soustraction choisi et/ou de la limite élastique de l'acier ou du super alliage. Le niveau de microdéformations permet la création d'un réseau de dislocations suffisant à la diffusion rapide de l'élément chrome vers la surface du substrat 10 ;

iii. atteindre à la surface du substrat 10 une température minimale, par exemple, de 400°C et, préférablement, de 500°C à 900°C, la température devant être atteinte instantanément ou au moins quasi instantanément par échauffement local selon une cinétique d'échauffement supérieure ou égale 400°C/s, et de préférence de 400°C/s à 900°C/s.

Par « échauffement local », on entend un échauffement à l'endroit même du retrait de la couche superficielle, et de manière quasi instantanée audit retrait.

Les conditions i), ii), iii) sont cumulatives pour obtenir la couche d'oxyde 30 monophasée désirée (figure 3).

Concernant le point ii), en fonction de la composition du substrat 10, l'élément chrome sera plus ou moins présent dans la matrice et la densité du réseau de dislocations nécessaire ne sera donc pas la même. L'homme du métier choisira le niveau de dislocation en fonction du pourcentage massique de chrome dans le substrat 10.

Le niveau de microdéformation peut être déterminé par diffraction des rayons X (DRX).

Les figures 4A et 4B représentent les diffractogrammes (Co-K$\alpha$) d'un tube en acier T91 (X10CrMoVNb9-1) préparé par un procédé selon un mode de réalisation de l'invention, au niveau de l'axe du tube et de la circonférence du tube, respectivement.

Le substrat 10 obtenu après l'étape b), est en traction bi-axiale. Il présente une contrainte axiale $\sigma 11 = 270$ MPa, une contrainte circonférentielle $\sigma 22 = 320$ MPa et une microdéformation moyenne (approximation de Lorentz) : $<\varepsilon> = 3,1\ 10^{-3}$. On observe un élargissement du pic lié à la formation de microdéformations à la surface du substrat 10. Les microdéformations ont été mesurées sur des profondeurs allant de 2 à 17 $\mu$m, perpendiculairement à la surface du substrat 10.

Concernant le point iii), le procédé de soustraction choisi, réalisé sous air, délivre localement sur la surface une forte puissance de déformation qui se convertit en chaleur et provoque de fortes variations de température. Ce sont à la fois des variations par rapport au temps (échauffement très rapide sous le moyen de soustraction et refroidissement très rapide après le passage de l'outil) et des gradients par rapport à l'espace (surface chaude sur substrat 10 froid). Ce rapide passage à haute température de la surface permet la nucléation de l'oxyde. Le gradient de température de refroidissement sera supérieur ou égal 100°C/s sur la plage 900°C/400°C.

Le procédé est réalisé sous atmosphère sèche.

La température à l'interface substrat/moyen de soustraction pourra être, éventuellement, régulée à l'aide d'un air sec à faible pression partielle de $H_2O$ inférieure à 20.000ppm, préférentiellement inférieure à 500ppm et encore plus préférentiellement inférieure à 3ppm. Il a été observé que l'utilisation d'un fluide de refroidissement à base aqueuse aura un effet négatif sur la formation de l'oxyde.

De préférence, l'étape de soustraction est réalisée à une température inférieure à 400°C.

L'étape de soustraction de matière est effectuée sous atmosphère oxydante (sous air ou sous toute autre atmosphère contenant au moins 0,2atm de dioxygène) pour créer instantanément à la surface du substrat 10 une fine couche d'un oxyde riche en Cr $(Cr_xFe_{1-x})_2O_3$ (avec x compris entre 0 et 0,2; par exemple x = 0,1) rhomboédrique d'épaisseur nanométrique. Cet oxyde est aussi noté $(Cr, Fe)_2O_3$.

L'oxyde formé est en compression. En effet, l'oxyde a un volume plus grand que le substrat 10 à partir duquel il se forme. Son extension latérale étant contrariée par le substrat 10, il se retrouve en compression. Ce point contribue au caractère protecteur de la couche en diminuant les coefficients de diffusion en son sein.

La surface du substrat 10 ayant été soumise à l'étape de soustraction de matière répondant aux critères i, ii) et iii), sous atmosphère oxydante sèche, est dans un état de contraintes résiduelles en traction. Schématiquement, cela correspond à la formation d'une « peau » chaude, formée lors de la soustraction de matière, se contractant au contact d'un substrat 10 resté froid en profondeur.

Au contraire, les surfaces soumises à une étape de polissage sont le siège de contraintes résiduelles en compression et ne permettent pas de former l'oxyde recherché. De même, une étape de laminage à chaud ou à froid, de rectification, d'électro polissage ou d'électroérosion, ou encore un procédé SMAT ne permet pas d'obtenir simultanément le niveau de microdéformation et l'échauffement recherchés. L'oxyde obtenu avec de tels procédés ne sera pas un oxyde mixte de fer et de chrome et/ou ne sera pas un oxyde monophasique et/ou n'aura pas l'épaisseur finale recherchée. Il n'aura donc pas les propriétés optiques et/ou de stabilité thermique souhaitées.

L'étape de soustraction de matière pourra être choisie par l'homme du métier, par exemple, parmi le meulage, perçage, fraisage, tournage ou tout autre moyen permettant l'obtention des trois conditions simultanées i, ii), iii).

Par exemple l'homme du métier pourra suivant son application partir d'un substrat plan en acier de type X10CrMoVNb9-1 dans un état quelconque. A l'aide d'une disqueuse électrique ou pneumatique, il choisira la nature du disque de préférence continu, compatible avec le substrat par exemple avec une base corindon ou diamant. La vitesse de rotation du disque, la pression de contact ainsi que les mouvements longitudinaux et transversaux à appliquer seront choisis de manière à pouvoir satisfaire aux critères i, ii), iii). L'application peut être telle que la continuité soit assurée à la surface du substrat. En outre, pour satisfaire aux conditions d'oxydation, la mise en œuvre sera réalisée sous une atmosphère contrôlée répondant aux exigences définies précédemment. L'application d'un mouvement quelconque de l'outil dans une atmosphère quelconque ne permettra pas l'obtention au final d'un oxyde mince, continu et conforme

A titre d'exemple non limitatif, l'étape de soustraction, respectant les critères i), ii) et iii), peut être mise en œuvre sur un substrat en acier du type $X_{10}CrMoVNb_{9-1}$, notamment sous la forme d'une pièce d'acier plane. L'état initial du substrat d'acier importe peu. En d'autres termes le substrat d'acier peut être brut de transformations à chaud, à froid ou ayant au préalable reçu au moins une préparation. L'étape de soustraction comprend alors l'application d'une pression de contact sur le substrat d'acier au moyen d'une disqueuse électrique ou pneumatique (par exemple une disqueuse électroportative). Le choix du disque de la disqueuse est à la portée de l'homme du métier. Le disque choisi est de préférence continu (en d'autres termes dépourvu d'entailles) et compatible avec la nature du substrat d'acier. En particulier, le disque peut être une base diamant ou préférentiellement une base corindon.

La vitesse périphérique maximale du disque peut être déterminée en fonction du diamètre, de la nature, et de la vitesse de rotation dudit disque. Par exemple, un disque de 125mm de diamètre de type AS 30 S INOX BF peut se voir imposer une vitesse périphérique maximale de 80 m.s$^{-1}$.

Lors de l'étape de soustraction, la pression et l'angle de contact du disque par rapport à la surface du substrat d'acier sont adaptés de manière à pouvoir satisfaire aux exigences sécurité et conformes aux règles de l'art quant à l'utilisation générale de ces équipements.

Enfin, pour satisfaire aux conditions d'oxydation, la mise en œuvre peut être réalisée sous une atmosphère contrôlée répondant aux exigences définies précédemment (par exemple un air sec à faible pression partielle de $H_2O$ inférieure à 20.000ppm, préférentiellement inférieure à 500ppm et encore plus préférentiellement inférieure à 3ppm).

Croissance de la couche d'oxyde 30 (Cr, Fe)$_2$O$_3$:

Lors de l'étape c), un traitement thermique pour faire croître la couche d'oxyde 30 préalablement formée à l'étape b) est réalisé. La température du traitement thermique va de 400°C à 1000°C, et de préférence de 400°C à 850°C. La température sera choisie par l'homme du métier en fonction de la composition du substrat 10. La durée du traitement thermique dépend de la géométrie du substrat 10 et de l'épaisseur de la couche d'oxyde 30 formée lors de l'étape b). La durée va, par exemple, de 5 s à 2 h, et de préférence, de 1 min à 60 minutes.

Le traitement thermique est réalisé sous une atmosphère d'air sec ou contenant une pression partielle de $H_2O$ inférieure à 10.000 ppm, par exemple compris entre 1 ppm et 10.000 ppm, et préférentiellement inférieure à 600 ppm, par exemple comprise entre 1 ppm et 600 ppm, encore plus préférentiellement inférieure à 500 ppm, par exemple comprise entre 1 ppm à 500 ppm.

A l'issue de l'étape c), la couche d'oxyde 30 mixte de fer et chrome du type (Fe,Cr)$_2$O$_3$ de type rhomboédrique présente une épaisseur allant de 70nm à 150nm, et de préférence de 80nm à 120nm, par exemple de l'ordre de 100 nm.

Il a été observé que l'épaisseur d'oxyde monophasé formé à l'issue de l'étape c), tendait vers un maximum de l'ordre de 150nm indépendamment de la durée et de la température du traitement d'oxydation. Au contraire, les couches d'oxyde non monophasées peuvent présenter des épaisseurs allant jusqu'à plus de 400nm.

L'étape c) permet de relâcher les contraintes mécaniques du matériau

Le substrat 10 obtenu par le procédé précédemment décrit est recouvert par une couche d'oxyde 30 stable. Il n'y pas de couches intercalées entre le substrat 10 en acier et la couche d'oxyde 30. La couche d'oxyde 30 présente des propriétés optiques intrinsèques de sélectivité, c'est-à-dire une forte absorbance solaire et une faible émittance.

Le substrat 10 obtenu par le procédé précédemment décrit peut, par exemple, être utilisé pour réaliser un absorbeur solaire dont les propriétés de sélectivité sont améliorées par rapport aux absorbeurs solaires obtenus par des techniques connues de l'état de la technique.

En particulier et à titre de comparaison, les inventeurs ont déterminé les propriétés d'un absorbeur obtenu selon un procédé connu de l'état de la technique et d'un absorbeur obtenu par le procédé selon la présente invention.

Dans les deux cas, il s'agissait donc d'oxyder la surface d'un substrat fait d'acier de type T91 (X10CrMoVNb9-1).

A cet égard, la figure 7 reproduit une courbe de réflectance hémisphérique d'un substrat T91 (X10CrMoVNb9-1) (dit « échantillon connu ») poli et oxydé 600°C 1h préparé suivant le procédé décrit dans le document [4] cité à la fin de la description.

La figure 8, quant à elle, représente la courbe de réflectance hémisphérique d'un substrat T91 (X10CrMoVNb9-1) (dit « échantillon inventif ») préparé suivant l'invention et oxydé dans les mêmes conditions.

Les courbes de réflectance relatives à l'échantillon connu et à l'échantillon inventif permettent de calculer les valeurs d'absorbance solaire ($\alpha$) et d'émittance ($\varepsilon$) à 100°C, 300°C et 450°C de chacun de ces deux échantillons. La méthode permettant ces calculs est présentée à la section « annexe » de la présente invention.

Ainsi, le tableau 1 rassemble les propriétés d'absorbance et d'émittance de l'échantillon connu, et le tableau 2 celles de l'échantillon inventif.

Tableau 1

| α | ε (100°C) | ε (300°C) | ε (450°C) |
|-------|-----------|-----------|-----------|
| 73,17 | 6,47 | 9,50 | 11,91 |

Tableau 2

| α | ε ( 100°C) | ε ( 300°C) | ε ( 450°C) |
|-------|-----------|-----------|-----------|
| 77,70 | 2,30 | 3,42 | 6,89 |

En comparant les valeurs des deux tableaux on constate que pour un même type d'échantillon ici T91 (X10CrMoVNb9-1) le procédé de l'invention permet d'obtenir un tube avec un niveau d'absorbance solaire plus élevé 77,70% au lieu de 73,17% tout en ayant un niveau d'émittance plus faible de 6,89 % à 450°C contre 11,91 %.

La sélectivité de l'absorbeur peut être améliorée par l'ajout d'une ou de plusieurs couches antireflet 40 déposée a postériori sur la couche d'oxyde 30 (figure 5), voire des couches absorbantes. L'épaisseur et la nature de la couche ou des couches dépendront des propriétés antireflet désirées et pourront être facilement calculées à l'aide d'un outil de simulation optique. On peut citer à titre illustratif le programme de simulation optique SCOUT (téléchargeable à partir du site internet : www.mtheiss.com) utilisé par des équipes de recherche travaillant sur le dépôt multicouches d'absorbeurs solaires sélectifs.

L'absorbeur solaire fabriqué selon le procédé de l'invention est plutôt orienté pour des moyennes voire hautes températures (solaire thermodynamique à concentration).

Le substrat 10 peut également être utilisé pour réaliser la partie sensible d'un capteur de flux, ou de température sous irradiation.

Le substrat 10 peut également être utilisé pour des applications en température sous air (inférieure à la température d'usage du substrat 10), ou pour des applications nécessitant un renforcement de la protection contre l'oxydation à chaud.

Par exemple, la température d'usage d'un acier T91 (X10CrMoVNb9-1) est d'environ 650°C.

Exemples illustratifs et non limitatifs d'un mode de réalisation :

Le procédé a été réalisé sur un substrat 10 en acier contenant environ 9,5% de Cr (T91 (X10CrMoVNb9-1)). Notamment, le substrat 10 a été oxydé à 650°C pendant une heure sous air sec de manière à former la couche 30 protectrice sur la surface du substrat 10. La couche 30 ainsi formée est une couche de $(Fe, Cr)_2O_3$ de 90nm d'épaisseur. Une couche antireflet de $SiO_2$ a également été déposée sur une partie du substrat 10 (dite « partie I ») laissant une autre partie de l'échantillon (dite « partie II ») dépourvue de couche antireflet.

Le caractère monophasé de la couche d'oxyde est vérifié par diffraction des rayons X. L'équipement utilisé est un diffractomètre Bruker (modèle : D8 Advance) équipé d'une source Cu et d'un détecteur linéaire de type LynxEye. La tension et le courant d'alimentation du tube RX sont respectivement de 40 kV et 40 mA. La largeur du faisceau est de 12 mm, sa divergence de 0,45°. Dans ces conditions, la seule phase détectée dans l'oxyde est $(Fe,Cr)_2O_3$ rhomboédrique confirmant le caractère monophasé de la couche d'oxyde.

Un substrat 10 et sa couche d'oxyde 30 protectrice obtenue par le procédé de l'invention a été testé en conditions d'usage (500°C à l'air), et a en particulier été soumis à une exposition de 3000 heures à 500 °C sous air. A cet égard, la figure 9 représente les diffractogrammes obtenus sur l'échantillon avant exposition (diffractogramme « R »), après 3000 heures d'exposition à 500 °C et sous air, respectivement, dans la partie I (diffractogramme « I »), et dans la partie I (diffractogramme « II »).

Sur chacun de ces trois diffractogrammes, les flèches indiquent des raies représentatives de la couche d'oxyde $(Fe, Cr)_2O_3$. Aucune évolution notable de ces dernières n'est détectée, confirmant ainsi une excellente stabilité de la couche d'oxyde. Ces résultats permettent donc de confirmer que le substrat 10 est protégé de l'oxydation.

Les inventeurs ont également mesuré la variation des propriétés optiques, notamment l'absorbance solaire et l'émittance à 450 °C, au cours de 3000 heures de vieillissement à 500 °C sous air.

Les résultats obtenus sont rassemblés aux figures 10a et 10b qui représentent, respectivement, l'évolution de l'absorbance solaire et de l'émittance à 450 °C (axe vertical en pourcentage) en fonction du temps d'exposition (axe horizontal en heures). Ces deux grandeurs restent relativement constantes au cours de l'exposition, démontrant ainsi une excellente stabilité des propriétés optiques des échantillons ainsi testés.

La stabilité des propriétés optiques et de la couche d'oxyde mesurée par Diffraction des Rayons X montre l'excellente résistance à l'oxydation sous air à 500°C des échantillons par rapport aux échantillons dans les documents [5] et [6] cités à la fin de la description.

## ANNEXE

Par « absorbance », on entend un coefficient d'absorption d'un corps d'une onde électromagnétique. Dans le cas présent, l'absorbance solaire correspond au coefficient d'absorption du spectre solaire par le matériau, en particulier de la couche d'oxyde 30. Il se calcul à partir du spectre de réflectance mesuré d'un spectrophotomètre et du spectre solaire.

Par « émittance », on entend le pourcentage du flux radiatif émis dans toutes les directions par un matériau, notamment la couche d'oxyde 30, à une température T donnée par rapport au flux radiatif dans toutes les directions du corps noir à cette même température (il est entendu qu'un corps noir présente une émittance de 100%).

Par « Réflectance » ou « réflectance totale », on en entend la proportion de flux lumineux que réfléchie une surface en fonction d'un flux incident sur ladite surface. La réflectance est totale dès lors qu'elle est mesurée dans toutes les directions à l'aide d'une sphère d'intégration. Le spectre de réflectance donne la réflectance en fonction de la longueur d'onde.

La mesure du spectre de réflectance totale permet de calculer l'absorbance solaire $\alpha$ et l'émittance $\varepsilon_T$ à une température T. On suppose ici que la loi de Kirchhoff est applicable puisque le matériau est opaque (L'homme du métier pourra à cet égard consulter les documents [1] et [2] cités à la fin de la description), de sorte que $\varepsilon(\lambda;\theta,\phi) = \alpha(\lambda;\theta,\phi)$ (1).

Si la mesure totale (sur tout l'espace) et pour un matériau opaque et sans effet non linéaire (ce qui est généralement admis pour les absorbeurs solaire), l'émittance totale et la réflectance totale sont liées par la relation $\varepsilon_T(\lambda) = 1 - \rho_T(\lambda)$ (2).

Ainsi, l'absorptance solaire et l'émittance à la température T sont définies par les relations suivantes :

$$\alpha = 1 - \frac{\int_{\lambda=280nm}^{2500nm} \rho_T(\lambda) \times S(\lambda) d\lambda}{\int_{\lambda=280nm}^{2500nm} S(\lambda) d\lambda} \qquad (3)$$

$$\varepsilon(T) = 1 - \frac{\int_{\lambda=280\,nm}^{16\,000\,nm} \rho_T(\lambda) \times B_T(\lambda)\,d\lambda}{\int_{\lambda=280\,nm}^{16\,000\,nm} B_T(\lambda) d\lambda} \qquad (4)$$

Avec :

$\alpha$ : absorptance solaire totale
$\varepsilon(T)$ : émittance à la température T
$\rho_T(\lambda)$ : réflectance totale à la longueur d'onde $\lambda$
$B_T(\lambda)$ : Irradiance du corps noir à la température T et à la longueur d'onde $\lambda$
$S(\lambda)$ : Irradiance solaire à la longueur d'onde $\lambda$
$\lambda$ : longueur d'onde

La procédure de mesure est décrite dans l'article de J. Braillon *et al.* [3] cité à la fin de la description.

Un absorbeur solaire est dit sélectif s'il présente une forte absorbance solaire et une faible émittance à la température de travail. La courbe idéale d'un tel matériau est donnée dans l'article de C. Kennedy [1] cité à la fin de la description, et reproduite à la figure 6.

## RÉFÉRENCES

[1] C. Kennedy, "Review of mid- to high- temperature solar selective absorber materials," Tech. Rep. NREL/TP-520-31267, NREL, National Renewable Energy Laboratory 1617 Cole Boulevard Golden, Colorado 80401-3393, 2002;

[2] J. Palmer, Handbook of Optics, second ed., Part II,, ch. 25, The Measurement of Transmission, Absorption, Emission and Reflection. M. Bass, 1994;

[3] J. Braillon et al., Development of optical tool for the characterization of selective solar absorber tubes, AIP Conférence Proceedings 1734, 130004 (2016);

[4] FR2976349 ;

[5] O. Raccurt et al., "Study of the stability of a selective solar absorber coating under air and high temperature conditions", Energy Procedia, Vol. 69, 2015, p 1551-1557;

[6] Raccurt, O. et al., "In air durability study of solar selective coating for parabolic trough technology", (2017), AIP Conférence Proceedings 1850(1), 130010.

**Revendications**

1. Procédé pour former une couche d'oxyde monophasé (30) $(Fe, Cr)_2O_3$ de structure rhomboédrique sur un substrat (10) en acier ou en super alliage comprenant les étapes successives suivantes :

   a) fourniture d'un substrat (10) en acier ou en super alliage recouvert par une couche superficielle (20), l'acier comprenant au moins 2% en poids de chrome,

   b) retrait de la couche superficielle (20) jusqu'à atteindre le substrat (10), par une étape de soustraction, avantageusement une étape de soustraction mécanique, sous une atmosphère contenant au moins 0,2atm de dioxygène, l'étape de soustraction engendrant un niveau de microdéformations dans le réseau cristallin de l'acier ou du super alliage supérieur à $1,0.10^{-3}$ et un échauffement local selon une cinétique supérieure à 400°C/s, de manière à former une couche d'oxyde monophasé (30) $(Fe, Cr)_2O_3$ rhomboédrique,

   c) réalisation d'un traitement thermique, sous air, à une pression partielle en eau inférieure à 10.000ppm, et à une température allant de 400°C à 1000°C, de manière à faire croitre la couche d'oxyde monophasé (30) rhomboédrique formée à l'étape b) jusqu'à une épaisseur allant de 70nm à 150nm.

2. Procédé selon la revendication 1, **caractérisé en ce que** l'étape de soustraction mécanique de l'étape b) est réalisée à une température allant de -10°C à 400°C.

3. Procédé selon la revendication précédente, **caractérisé en ce que** l'étape de soustraction mécanique de l'étape b) est réalisée à une température allant de -10°C à 100°C.

4. Procédé selon l'une quelconque des revendications précédentes, **caractérisé en ce que** la teneur en eau lors de l'étape b) est inférieure à 20.000ppm, de préférence inférieure à 500ppm et encore plus préférentiellement inférieure à 3ppm.

5. Procédé selon l'une quelconque des revendications précédentes, **caractérisé en ce que** le niveau de microdéformations engendrées dans le réseau cristallin de l'acier ou du super alliage à l'étape b) est supérieur à $1,5.10^{-3}$, et de préférence supérieur à $3.10^{-3}$.

6. Procédé selon l'une quelconque des revendications précédentes, **caractérisé en ce que** la cinétique d'échauffement est comprise entre 400°C/s à 900°C/s.

7. Procédé selon l'une quelconque des revendications précédentes, **caractérisé en ce que** le traitement thermique est réalisé pendant une durée allant de 5s à 2h, et de préférence, de 1min à 60minutes.

8. Procédé selon l'une quelconque des revendications précédentes, **caractérisé en ce que** la pression partielle en eau, lors de l'étape c), est inférieure à 600ppm, et de préférence inférieure à 500ppm.

9. Procédé selon l'une quelconque des revendications précédentes, **caractérisé en ce que** l'épaisseur de la couche (30) d'oxyde rhomboédrique obtenue à l'étape c) va de 70 à 150nm.

10. Procédé selon l'une quelconque des revendications précédentes, **caractérisé en ce que** le pourcentage de chrome de l'acier va de 2 à 25% en poids, et de préférence, de 5 à 16% en poids.

11. Procédé de fabrication d'un absorbeur solaire comprenant les étapes successives suivantes :

    - formation d'une couche d'oxyde monophasé (30) $(Fe, Cr)_2O_3$ de structure rhomboédrique sur un substrat (10) en acier ou en super alliage, selon les étapes a) à c) telles que définies dans la revendication 1,
    - application d'une couche antireflet (40) sur la couche d'oxyde monophasé (30).

**12.** Absorbeur solaire obtenu selon le procédé tel que défini dans la revendication 11, comprenant un substrat (10) en acier ou en super alliage recouvert successivement par une couche d'oxyde monophasé (30) (Fe, Cr)$_2$O$_3$ rhomboédrique, ayant une épaisseur allant de 70nm à 150nm, et par une couche antireflet (40).

**13.** Absorbeur solaire selon la revendication précédente, **caractérisé en ce que** la couche d'oxyde (30) a une épaisseur allant de 80nm à 120nm.

**Patentansprüche**

**1.** Verfahren zur Bildung einer Schicht aus einphasigem Oxid (30) (Fe, Cr)$_2$O$_3$ mit rhomboedrischer Struktur auf einem Substrat (10) aus Stahl oder aus einer Superlegierung, umfassend die folgenden aufeinanderfolgenden Schritte:

a) Bereitstellen eines Substrats (10) aus Stahl oder aus einer Superlegierung, das durch eine Oberflächenschicht (20) bedeckt ist, wobei der Stahl wenigstens
2 Gewichts-% Chrom enthält,
b) Entfernen der Oberflächenschicht (20), bis das Substrat (10) erreicht wird, durch einen Subtraktionsschritt, vorzugsweise einen mechanischen Subtraktionsschritt, unter einer Atmosphäre, die wenigstens 0,2 atm Disauerstoff enthält, wobei der Subtraktionsschritt ein Mikroverformungsniveau in dem Kristallgitter des Stahls oder der Superlegierung oberhalb von $1{,}0 \cdot 10^{-3}$ erzeugt sowie eine lokale Erhitzung gemäß einer Kinetik oberhalb von 400° C/s, derart, dass eine Schicht aus einphasigem rhomboedrischen Oxid (30) (Fe, Cr)$_2$O$_3$ gebildet wird,
c) Realisieren einer thermischen Behandlung an Luft bei einem Wasserpartialdruck unterhalb von 10.000 ppm und bei einer Temperatur, die von 400° C bis 1000° C geht, derart, dass die im Schritt b) gebildete Schicht aus rhomboedrischem einphasigem Oxid (30) bis zu einer Dicke wächst, die von 70 nm bis 150 nm geht.

**2.** Verfahren nach Anspruch 1, **dadurch gekennzeichnet, dass** der mechanische Subtraktionsschritt des Schritts b) bei einer Temperatur realisiert wird, die von -10° C bis 400° C geht.

**3.** Verfahren nach dem vorhergehenden Anspruch, **dadurch gekennzeichnet, dass** der mechanische Subtraktionsschritt des Schritts b) bei einer Temperatur realisiert wird, die von -10° C bis 100° C geht.

**4.** Verfahren nach einem der vorhergehenden Ansprüche, **dadurch gekennzeichnet, dass** der Wassergehalt während des Schritts b) kleiner als 20.000 ppm ist, vorzugsweise kleiner als 500 ppm und noch weiter bevorzugt kleiner als 3 ppm.

**5.** Verfahren nach einem der vorhergehenden Ansprüche, **dadurch gekennzeichnet, dass** das Niveau von Mikroverformungen, die in dem Kristallgitter des Stahls oder der Superlegierung im Schritt b) erzeugt werden, größer als $1{,}5 \cdot 10^{-3}$ ist, und vorzugsweise größer als $3 \cdot 10^{-3}$.

**6.** Verfahren nach einem der vorhergehenden Ansprüche, **dadurch gekennzeichnet, dass** die Kinetik der Erhitzung zwischen 400° C/s bis 900° C/s enthalten ist.

**7.** Verfahren nach einem der vorhergehenden Ansprüche, **dadurch gekennzeichnet, dass** die thermische Behandlung während einer Dauer realisiert wird, die von 5 s bis 2 h geht, und vorzugsweise von 1 min bis 60 Minuten.

**8.** Verfahren nach einem der vorhergehenden Ansprüche, **dadurch gekennzeichnet, dass** der Wasserpartialdruck während des Schritts c) kleiner als 600 ppm ist, und vorzugsweise kleiner als 500 ppm.

**9.** Verfahren nach einem der vorhergehenden Ansprüche, **dadurch gekennzeichnet, dass** die Dicke der Schicht (30) aus rhomboedrischem Oxid, die im Schritt c) erhalten wird, von 70 bis 150 nm geht.

**10.** Verfahren nach einem der vorhergehenden Ansprüche, **dadurch gekennzeichnet, dass** der Chromgehalt des Stahls von 2 bis 25 Gewichts-% geht, und vorzugsweise von 5 bis 16 Gewichts-%.

**11.** Verfahren zur Herstellung eines Solarabsorbers, umfassend die folgenden aufeinanderfolgenden Schritte:

- Bilden einer Schicht aus einphasigem Oxid (30) (Fe, Cr)$_2$O$_3$ mit rhomboedrischer Struktur auf einem Substrat (10) aus Stahl oder aus einer Superlegierung gemäß den Schritten a) bis c) wie in Anspruch 1 definiert,

- Aufbringen einer Antireflexionsschicht (40) auf die Schicht aus einphasigem Oxid (30).

12. Solarabsorber, der gemäß dem Verfahren wie in Anspruch 11 definiert erhalten ist, umfassend ein Substrat (10) aus Stahl oder aus einer Superlegierung, das nacheinander durch eine Schicht aus rhomboedrischem einphasigem Oxid (30) $(Fe, Cr)_2O_3$ mit einer Dicke, die von 70 nm bis 150 nm geht, und durch eine Antireflexionsschicht (40) bedeckt ist.

13. Solarabsorber nach dem vorhergehenden Anspruch, **dadurch gekennzeichnet, dass** die Oxidschicht (30) eine Dicke hat, die von 80 nm bis 120 nm geht.


**Claims**

1. Method for forming a layer of single-phase oxide (30) $(Fe, Cr)_2O_3$ with a rhombohedral structure on a steel or super alloy substrate (10) comprising the following successive steps:

   a) supply of a steel or super alloy substrate (10) covered by a surface layer (20), the steel comprising at least 2% by weight of chromium,
   b) removal of the surface layer (20) to reach the substrate (10), using a subtraction step, advantageously a mechanical subtraction step, under an atmosphere containing at least 0.2 atm of dioxygen, the subtraction step generating a level of microstrains in the steel or super alloy crystalline lattice larger than $1.0 \times 10^{-3}$ and local heating at a rate of more than 400°C/s, so as to form a single-phase rhombohedral oxide $(Fe, Cr)_2O_3$ layer (30),
   c) performance of a heat treatment under air at a partial water pressure of less than 10,000 ppm, and at a temperature varying from 400°C to 1000°C, so as to make the single-phase rhombohedral oxide layer (30) formed in step b) grow to a thickness from 70nm to 150nm.

2. Method according to claim 1, **characterised in that** the mechanical subtraction step in step b) is done at a temperature from -10°C to 400°C.

3. Method according to the preceding claim, **characterised in that** the mechanical subtraction step in step b) is done at a temperature from -10°C to 100°C.

4. Method according to any one of the preceding claims, **characterised in that** the water content during step b) is less than 20.000ppm, preferably less than 500ppm, and even more preferably less than 3ppm.

5. Method according to any one of the preceding claims, **characterised in that** the level of microstrains generated in the steel or super alloy crystalline lattice in step b) is more than $1.5 \times 10^{-3}$, and preferably more than $3 \times 10^{-3}$.

6. Method according to any one of the preceding claims, **characterised in that** the heating rate is between 400°C/s and 900°C/s.

7. Method according to any one of the preceding claims, **characterised in that** the heat treatment is applied for a duration from 5 s to 2 h, and preferably from 1 minute to 60 minutes.

8. Method according to any one of the preceding claims, **characterised in that** the partial water pressure during step c) is less than 600 ppm, and preferably less than 500 ppm.

9. Method according to any one of the preceding claims, **characterised in that** the thickness of the rhombohedral oxide layer (30) obtained in step c) varies from 70 to 150nm.

10. Method according to any one of the preceding claims, **characterised in that** the percentage of chromium in the steel varies from 2 to 25% by weight, and preferably from 5 to 16% by weight.

11. Method for fabrication of a solar absorber comprising the following steps in sequence:

   - formation of a layer (30) of single-phase oxide $(Fe, Cr)_2O_3$ with a rhombohedral structure on a steel or super alloy substrate (10), according to steps a) to c) as defined in claim 1),
   - application of an anti-reflection layer (40) on the single-phase oxide layer (30).

12. Solar absorber obtained using the method as defined in claim 11, comprising a steel or super alloy substrate (10) covered by a layer (30) of single-phase rhombohedral oxide $(Fe, Cr)_2O_3$ with a thickness from 70nm to 150nm, and an anti-reflection layer (40), in sequence.

13. Solar absorber according to the preceding claim, **characterised in that** the thickness of the oxide layer (30) is from 80nm to 120nm.

FIG.1A

FIG.1B

FIG.2

FIG.3

FIG.5

FIG.4A

FIG.4B

FIG.6

FIG.7

FIG.8

FIG.9

FIG.10a

FIG.10b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015087021 A
- EP 2784172 A
- FR 2976349

**Littérature non-brevet citée dans la description**

- **GREEF et al.** The oxidation of industrial FeCrMo steel. *Corrosion Science,* 2000, vol. 42, 1725-1740
- **V.C SHARMA et al.** A comparison of thermal performance of austenitic stainless steel solar absorber plates coloured by chemical and thermal oxidation techniques. *Energy,* 1981, vol. 6, 133-138
- **B. KARLSSON et al.** Optical constants and spectral selectivity of stainless steel and its oxides. *J. Appl. Phys.,* 1982, vol. 53 (9), 6340-6346
- **XIA et al.** Improve oxidation resistance at high temperature by nanocrystalline surface layer. *Scientific Reports,* 2015, vol. 5, 13027
- Review of mid- to high- temperature solar selective absorber materials. **C. KENNEDY.** Tech. Rep. NREL/TP-520-31267. NREL, National Renewable Energy Laboratory, 2002
- The Measurement of Transmission, Absorption, Emission and Reflection. **J. PALMER ; M. BASS.** Handbook of Optics. 1994
- **J. BRAILLON et al.** Development of optical tool for the characterization of selective solar absorber tubes. *AIP Conférence Proceedings,* 2016, vol. 1734, 130004
- **O. RACCURT et al.** Study of the stability of a selective solar absorber coating under air and high temperature conditions. *Energy Procedia,* 2015, vol. 69, 1551-1557
- **RACCURT, O. et al.** In air durability study of solar selective coating for parabolic trough technology. *AIP Conférence Proceedings,* 2017, vol. 1850 (1), 130010